(19) Europäisches Patentamt
European Patent Office
Office européen des brevets

(11) **EP 2 266 756 A2**

(12) **EUROPEAN PATENT APPLICATION**

(43) Date of publication:
**29.12.2010 Bulletin 2010/52**

(51) Int Cl.:
**B24B 55/06** (2006.01)     **B23Q 11/00** (2006.01)

(21) Application number: **10165893.8**

(22) Date of filing: **14.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **24.06.2009 GB 0910899**

(71) Applicant: **Airbus Operations Limited**
**Filton**
**Bristol BS99 7AR (GB)**

(72) Inventors:
• **Turner, Christopher**
  **Bristol BS99 7AR (GB)**
• **Rivera, Luis, Dr.**
  **Broughton, Cheshire CH4 ODR (GB)**

(74) Representative: **Butler, Daniel James**
**Airbus Operations Ltd**
**IP Department, Building 09A**
**Filton**
**Bristol BS99 7AR (GB)**

(54) **Contaminant extraction apparatus**

(57)     A composite material manufacturing apparatus has an extractor (100) which has a low pressure chamber (106), a first wall (112) separating the low pressure chamber and an area to be decontaminated (101), the first wall (112) defining a fluid transfer path (120) therethrough for fluid communication between the low pressure chamber (106) and the area to be decontaminated (101), wherein the first wall (112) at least partially surrounds the area to be decontaminated (101).

FIG. 1

**Description**

The present invention relates to a composite material manufacturing apparatus. More specifically, the present invention relates to a portable dust extraction device for use in composite manufacture.

Manufacturing processes such as re-working of composite components produce significant amounts of airborne contaminants such as carbon dust. This is particularly true for sanding operations. The dust produced is harmful to humans if inhaled. Therefore personal protective equipment (PPE) is necessary in order to protect the operator from dust inhalation.

One standard produced by the UK Health and Safety Executive sets an exposure limit of 5mg/m3 (= Workspace Exposure Limit = WEL). This is the maximum concentration of airborne particles, averaged over an 8 hour reference period, to which operators may be exposed by inhalation under any circumstances. For values above 50% of this limit, full respiratory equipment is advisable.

Known dust extraction utilises a vacuum hose positioned near the tool head to suck away the dust produced. The vacuum hose requires manual manipulation to keep it near the point at which dust is sprayed from the tool head. Therefore two operators are required; one to operate the tool, and the other to position the vacuum hose. Even with this system, much of the dust escapes the hose, and typically undesirably high values above 50% of the WEL are seen. Therefore both operators have to wear heavy and expensive PPE.

It is an aim of the present invention to provide an improved dust extraction apparatus.

According to a first aspect of the present invention there is provided composite material manufacturing apparatus comprising;

    a composite material manufacture machine tool,
    an airborne contaminant extractor having a low pressure chamber, a first wall separating the low pressure chamber and an area to be decontaminated, the first wall defining a fluid transfer path therethrough for fluid communication between the low pressure chamber and the area to be decontaminated, the fluid transfer path facing the area to be decontaminated over an angle range of more than 180 degrees wherein the low pressure chamber comprises a closed first end and a second end connected to a low pressure outlet, in which the cross sectional area of the low pressure chamber increases from the closed end to the low pressure outlet,
    in which the machine tool is positioned to be at least partially within the area to be decontaminated.

Advantageously, having at least a 180 degree range provides the user with the ability to rest the device around the workpiece and not worry about the direction in which the contaminant material is sprayed. As such, a further user is not required to operate the device. The increase in cross-sectional area provides for even suction around the area in which the tool is being used (i.e. the work area). The machine tool is preferably a sander, but can be any other manufacturing tool such as a drill or grinding machine.

According to a second aspect of the invention there is provided a method of manufacturing a composite material component comprising the steps of:

    providing a composite material manufacture machine tool,
    providing a composite workpiece,
    providing a low pressure chamber extending from a low pressure outlet, the low pressure chamber having a wall between the low pressure chamber and a work area defining a fluid transfer path therethrough, the fluid transfer path facing the area to be decontaminated over an angle range of more than 180 degrees wherein the low pressure chamber comprises a closed first end and a second end connected to a low pressure outlet, in which the cross sectional area of the low pressure chamber increases from the closed end to the low pressure outlet,,
    applying the tool to the workpiece at least partially within the work area,
    reducing the pressure at the low pressure outlet to extract contaminants from the work area through the fluid transfer path.

An example contaminant extraction device will now be described with reference to the accompany drawings in which:

    Figure 1 is a perspective view of a first contaminant extraction device in accordance with the present invention,
    Figure 2 is a plan view of the contaminant extraction device of figure 1,
    Figure 3a is a section view along A-A of figure 2,
    Figure 3b is a perspective view of an insert for the contaminant extraction device of figure 1,
    Figure 3c is a section view similar to figure 3a with the insert of figure 3b in-situ,
    Figure 3d is a section view of a second contaminant extraction device in accordance with the present invention, and,
    Figure 3e is a section view of a third contaminant extraction device in accordance with the present invention.

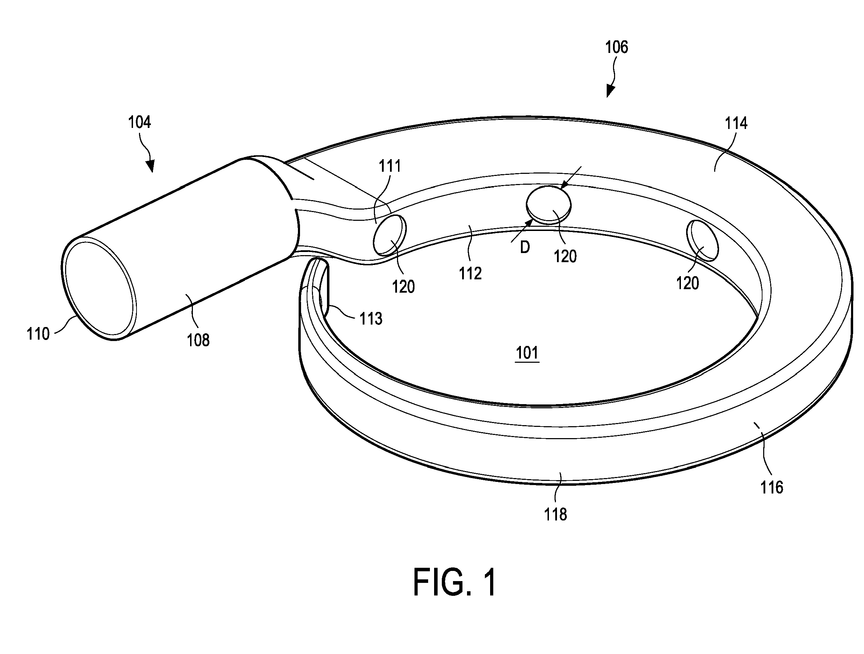

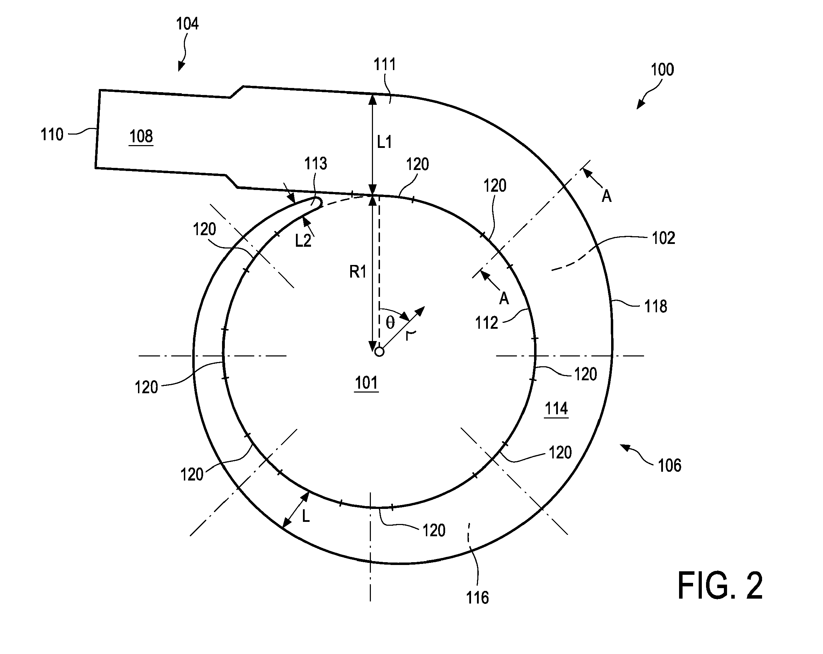

Figures 1 and 2 show a contaminant extraction device 100. The device 100 is in the form of a hollow shell defining an inner chamber 102. The device comprises an outlet section 104 and a pressure chamber section 106.

The outlet section 104 comprises a cylindrical tubular conduit 108 with a circular outlet 110. The pressure chamber section 106 is defined by an inner wall 112, a top wall 114, a bottom wall 116 and an outer wall 118. The four walls are generally at 90 degrees to each other in cross section so as to define a rectangular cross section as will be described below.

The pressure chamber section 106 is best described in terms of a radial coordinate system r,θ (where θ is in degrees).

The inner wall 112 extends from a first end 111 of the pressure chamber section 106 at r,θ=(R1 , 0) proximate the outlet section 104. The inner wall 112 extends to a second, opposite end 113 of the pressure chamber section 106 at r,θ=(R1 , 340). Therefore the inner wall 112 describes a circle segment of radius R1 for a 340 degree circle segment.

The outer wall 118 also extends from the first end 111 to the second end 113, and converges towards the inner wall 112 from the first end 111 to the second end 113. The outer wall 118 forms a spiral from r,θ = (R1+L1 , 0) to r,θ =(R1+L2 , 340). L2 is less than L1.

In this embodiment, R1 = 200mm, L1 = 64mm, L2 = 8mm. The radial distance between the inner wall 112 and the outer wall 118 L, reduces proportionally to the angle θ, so:

$$\text{at } \theta = 0, \qquad L = L1 = 64 \text{ mm},$$

$$\text{at } \theta = 90, \qquad L = 48 \text{ mm},$$

$$\text{at } \theta = 180, \qquad L = 32 \text{ mm},$$

and

$$\text{at } \theta = 270, \qquad L = 16 \text{ mm}.$$

Therefore the path of the outer wall 118 is an involute of the circle prescribed by the circle of the inner wall 112. The outer wall 118 forms an Archimedian spiral. The top wall 114 and the bottom wall 116 are parallel and equally spaced (at 30mm) throughout the length of the pressure chamber section 106. Therefore, the cross sectional area of the pressure chamber section 106 decreases proportionally to the angle θ.

It is beneficial for the spacing between the top and bottom walls (the out-of-plane "height" of the device) to be small to aid visibility and access of the user.

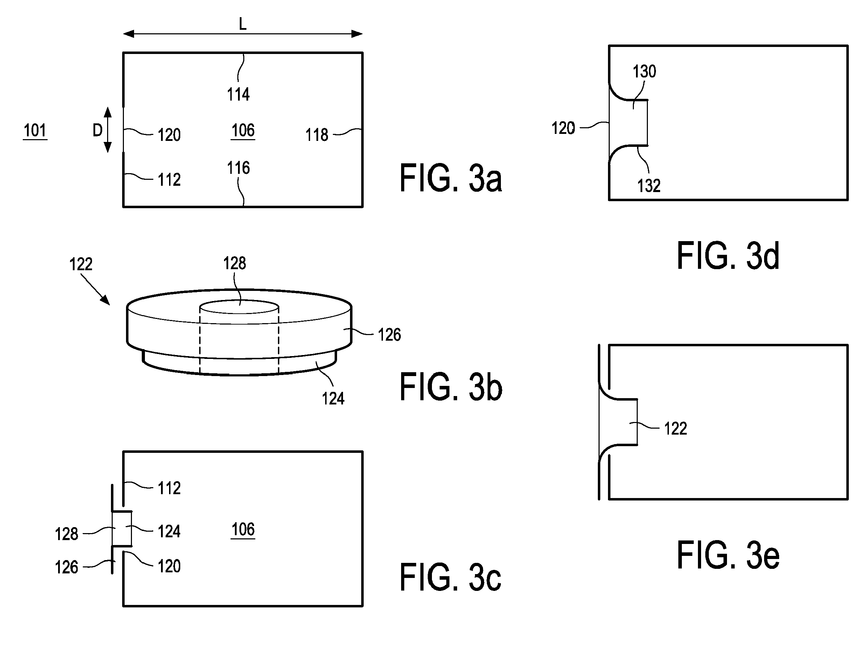

At discrete positions around the inner perimeter of the pressure chamber section 106, circular orifices 120 through the inner wall 112 are located (see figures 1 and 3a). All orifices have the same diameter D.

According to the invention, inserts 122 are provided as shown in figure 3b. Each insert comprises a base section 124 and a flange 126. Both the base section 124 and the flange 126 are cylindrical and define a central axial bore 128 therethrough. The diameter of the base section 124 is approximately D.

As shown in figure 3c, the base section 124 of the insert 122 is inserted into the orifice 120 such that the flange 126 abuts the inner wall 112. In this way, the inserts can be changed to adjust the diameter of the orifices 128 to provide the desired pressure distribution.

In use, the device 100 is connected to a vacuum hose (not shown) via the outlet section 104. The vacuum hose reduces the pressure in the inner chamber 102 and therefore the pressure chamber section 106. As the pressure in the section 106 is lower than ambient pressure, air flows into the section 106 through the orifices 120. Therefore if the device 100 is placed around a workpiece (not shown) in a decontamination area 101 such that the inner wall 112 substantially encloses the workpiece, airborne contaminants will be extracted.

Because the device almost completely surrounds the workpiece (i.e. it has a 340 degree perimeter) it is able to remove contaminants regardless of which direction the machine tool ejects them in. From this point of view, it is important that the fluid transfer path into the section 106 surrounds as much of the workpiece as possible.

The pressure distribution is important as ideally, the flow rate through each of the orifices 120 should be equal to provide an equal decontamination effect around the workpiece. It will be noted that the sum of the areas of the orifices 120 (or 128 if the inserts 122 are used) is equal to the area of the outlet orifice 110.

Equal pressure distribution is achieved by the reduction in cross sectional area of the section 106 with θ. What is important is that the cross-sectional area is progressively smaller at each orifice 120 moving further away from the outlet 110.

A further embodiment of the above invention is shown in figure 3d, in which the orifice 120 has an inwardly curved flow guide 130, which comprises radii 132. Figure 3e shows the same principle applied to the insert 122.

The device 100 is coloured white, to provide the user with an indication that the contaminant extraction is functioning correctly (carbon fibre residue, for example, is dark and shows up).

Variations of the above embodiments fall within the scope of the present invention.

The discrete orifices 120 may be a continuous orifice around the inner perimeter of the pressure chamber section 106. The orifice may be a constant height slit or may vary in height.

The path of the inner wall 112 may be any shape capable of at least partially surrounding a workpiece, and may be tailored to the outer profile of a given workpiece. For example the path may be polygonal (e.g. square, rectangular etc.) or otherwise curved (e.g. elliptical).

The device may be made flexible to provide the user with the ability to form the desired shape for the manufacturing process in question.

## Claims

1. A composite material manufacturing apparatus comprising;
a composite material manufacture machine tool,
an airborne contaminant extractor having a low pressure chamber, a first wall separating the low pressure chamber and an area to be decontaminated, the first wall defining a fluid transfer path therethrough for fluid communication between the low pressure chamber and the area to be decontaminated, the fluid transfer path facing the area to be decontaminated over an angle range of more than 180 degrees wherein the low pressure chamber comprises a closed first end and a second end connected to a low pressure outlet, in which the cross sectional area of the low pressure chamber increases from the closed end to the low pressure outlet,
in which the machine tool is positioned to be at least partially within the area to be decontaminated.

2. A composite material manufacturing apparatus according to claim 1 in which the extractor comprises a second wall at least partially defining the low pressure chamber, in which the second wall converges towards the first wall as the low pressure chamber extends away from the outlet.

3. A composite material manufacturing apparatus according to claim 3 in which the second wall describes an involute curve of the first wall.

4. A composite material manufacturing apparatus according to any preceding claim in which the fluid transfer path comprises a plurality of orifices defined in the first wall.

5. A composite material manufacturing apparatus according to claim 4 in which the plurality of orifices comprises:

a first orifice having a first axis perpendicular to a plane of the first orifice, and,
a second orifice having a second axis perpendicular to a plane of the second orifice,
in which the first and second axes are aparallel.

6. A composite material manufacturing apparatus according to any preceding claim comprising an orifice defined in the first wall, wherein the apparatus comprises a removable insert received in the orifice, the insert defining an insert orifice therethrough, the insert orifice defining the fluid transfer path.

7. A composite material manufacturing apparatus according to any preceding claim in which the at least the first wall of the extractor is flexible to selectively alter the area for decontamination.

8. A composite material manufacturing apparatus according to claim 7 in which the extractor is constructed from a flexible material.

9. A composite material manufacturing apparatus according to claim 5 in which the first and second axes converge at a position on the side of the first wall of the area to be decontaminated.

10. A composite material manufacturing apparatus according to any preceding claim in which the first wall is curved.

11. A composite material manufacturing apparatus according to claim 10 in which the first wall describes a circle segment.

12. A composite material manufacturing apparatus according to any preceding claim in which the fluid transfer path comprises a plurality of equally spaced orifices around the circumference of the first wall.

13. A composite material manufacturing apparatus according to any preceding claim in which the fluid transfer path is defined in the wall to face the area to be decontaminated over an angle range of at least 270 degrees.

14. A composite material manufacturing apparatus according to claim 13 in which the fluid transfer path is defined in the wall to face the area to be decontaminated over an angle range of at least 330 degrees.

15. A method of manufacturing a composite material component comprising the steps of:

providing a composite material manufacture machine tool,
providing a composite workpiece,
providing a low pressure chamber extending from a low pressure outlet, the low pressure chamber having a wall between the low pressure chamber and a work area defining a fluid transfer path therethrough, the fluid transfer path facing the area to be decontaminated over an angle range of more than 180 degrees wherein the low pressure chamber comprises a closed first end and a second end connected to a low pressure outlet, in which the cross sectional area of the low pressure chamber increases from the closed end to the low pressure outlet,,
applying the tool to the workpiece at least partially within the work area,

reducing the pressure at the low pressure outlet to extract contaminants from the work area through the fluid transfer path.

FIG. 1

EP 2 266 756 A2

FIG. 2

EP 2 266 756 A2

FIG. 3a

FIG. 3b

FIG. 3c

FIG. 3d

FIG. 3e

EP 2 266 756 A2